(19) Europäisches Patentamt
European Patent Office
Office européen des brevets

(11) **EP 2 507 409 B1**

(12) **EUROPEAN PATENT SPECIFICATION**

(45) Date of publication and mention
of the grant of the patent:
**17.06.2015 Bulletin 2015/25**

(21) Application number: **10801708.8**

(22) Date of filing: **21.11.2010**

(51) Int Cl.:
***C23C 30/00*** *(2006.01)*   ***B23B 27/14*** *(2006.01)*

(86) International application number:
**PCT/IL2010/000973**

(87) International publication number:
**WO 2011/067751 (09.06.2011 Gazette 2011/23)**

(54) **COATED ARTICLE AND METHOD FOR MAKING A COATED ARTICLE**

BESCHICHTETE GEGENSTAND UND VERFAHREN ZUR DESSEN HERSTELLUNG

ARTICLE REVÊTU ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.12.2009 IL 20254909**

(43) Date of publication of application:
**10.10.2012 Bulletin 2012/41**

(73) Proprietor: **Iscar Ltd.
24959 Tefen (IL)**

(72) Inventor: **LAYYOUS, Albir A.
25140 Me'ilya (IL)**

(74) Representative: **Vossius & Partner
Patentanwälte Rechtsanwälte mbB
Siebertstrasse 3
81675 München (DE)**

(56) References cited:
**EP-A2- 2 072 637     WO-A1-03/078689
GB-A- 2 308 134**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## FIELD OF THE INVENTION

The present invention relates to an article such as a cutting tool for metal machining or a wear part at least partially coated with a thick PVD coating having hard layers and ductile nano-layers.

## BACKGROUND OF THE INVENTION

It is known that coatings increase the working life of cutting tools or wear parts. PVD coatings have several attractive properties compared to CVD coatings, for example finer grained coatings and compressive stresses in the as-deposited state. However, PVD coatings are relatively thin, seeing as thicker PVD coatings are prone to spalling, frittering, cutting edge spalling and flaking all of which limit tool life.

Coatings having a metal layer that is deposited directly onto the surface of the substrate are known. This is known to enhance the adhesion of a PVD coating to a substrate.

EP 2072637 A2 describes a coating for a cutting tool which has a metallic interlayer placed between at least two non-metallic, functional layers or layer systems where the metallic interlayer comprises at least 60 at% metal elements chosen from one or more of Ti, Mo, Al, Cr, V, Y, Nb, W, Ta and Zr, or mixtures thereof. The non-metallic, functional layer or layer system is one or more of nitrides, oxides, borides, carbides, or combinations thereof.

## SUMMARY OF THE INVENTION

In accordance with an aspect of the present invention there is provided an at least partially coated article comprising a substrate and a coating. The article may be a cutting tool or may be a wear part. The coating has alternating layers of a ductile nano-layer and a hard layer adhered to each other, there being at least one sequence of three layers comprising a ductile nano-layer located between two hard layers.

The ductile nano-layer is as defined in the claims. The thickness of the ductile nano-layer is from 5 nm to 100 nm.

The hard layer is one or more ceramic layers that are nitrides, oxides, borides, carbides, or combinations thereof. The thickness of the hard layer is from 0.05 $\mu$m to 5 $\mu$m. Topically the hard layers are composed of $(Me_aX_{1-a})(N_wC_xB_yO_z)$ wherein Me is one or more metals chosen from the group consisting of Ti, Al, Cr and Zr; and X is one or more of elements chosen from the group consisting of Si, Ta, V, Y, and Nb, wherein $0.75 < a \le 1.0$; and $w+x+y+2=1$).

In some embodiments of the invention, the ductile nano-layer is sub-stoichiometric ceramic further comprising a non-metal component selected from the group consisting of N, O, C, B and combinations thereof.

In accordance with some embodiments, the coating comprises between 3 and 30 such sequences created by alternating ductile nano-layers with hard layers.

In some embodiments, the coating has at least two ductile nano-layers having compositions which differ from one another.

In accordance with some embodiments, the coating further comprises one or more auxiliary layers. An auxiliary layer may be adjacent the substrate, in which case it serves as an adhesion layer between the substrate and the first hard layer. Alternatively, or in addition, an auxiliary layer may be adjacent an uppermost hard layer in which case it serves as an outermost top layer of the coating. In all instances, when present, an auxiliary layer comprises at least 60% elements chosen from the group consisting of Hf, Al, Y, Fe, Co, Ni, Cu, Si, Ag, Au, Ru, refractory metals and mixtures thereof, and the thickness of the auxiliary layer is from 2 nm to 100 nm.

Typically, the total coating thickness is from 0.5 $\mu$m to 20 $\mu$m.

In another aspect of the invention, there is provided a method of making a coated article such as a cutting tool or a wear part comprising a substrate and coating. The method comprising the steps as defined in the claims.

Typically, the thickness of each of the hard layers is from 0.05 $\mu$m to 5 $\mu$m and the thickness of the ductile nano-layer is from 5 nm to 100 nm.

Typically, the coating is deposited with a PVD technique.

Optionally, the deposited hard layers are composed of $(Me_aX_{1-a}(N_wC_xB_yO_z)$ wherein Me is one of more metals selected from the group consisting of Ti, Al, Cr and Zr; X is one or more elements selected from the group consisting of Si, Ta, V, Y, and Nb; wherein $0.75 < a \le 1.0$; and $w+x+y+z=1$.

In some embodiments of the invention, steps b) and c) are alternatingly performed between 3 and 30 times.

In accordance with some embodiments, the coating method further comprises:

deposition a first auxiliary layer onto the substrate, prior to carrying out step b); and alternatively, or in addition

depositing a second auxiliary layer onto the outermost hard layer, whereby the second auxiliary layer serves as an outermost layer of the coating; wherein:

the first and second auxiliary layers each comprise at least 60% elements chosen from the group consisting of Hf, Al, Y, Fe, Co, Ni, Cu, Si, Ag, Au, Ru, refractory metals and mixtures thereof; and

the thickness of each auxiliary layer is from 2 nm to 100 nm.

BRIEF DESCRIPTION OF THE DRAWINGS

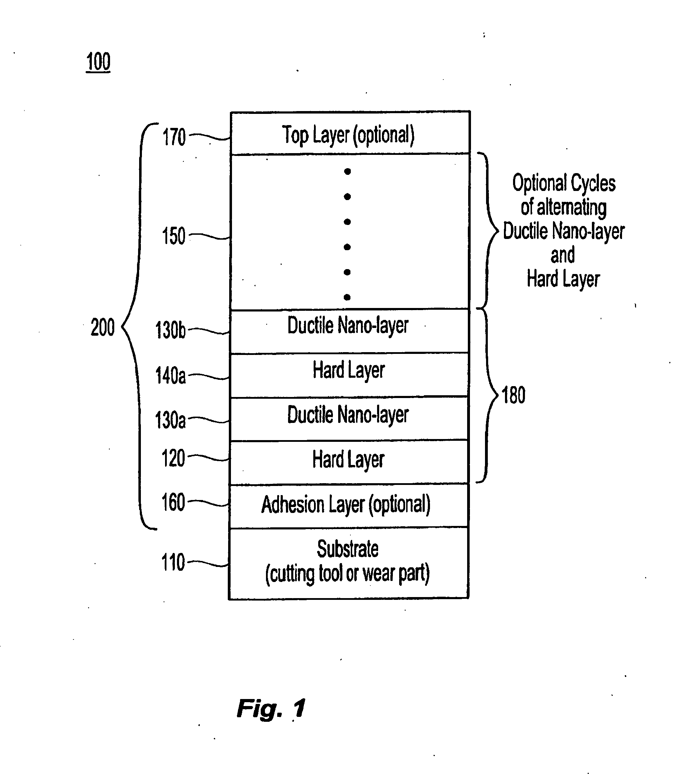

Fig. 1 shows an exemplary coating in accordance with the present invention.

DETAILED DESCRIPTION OF THE INVENTION

With reference to Fig. 1, the present invention relates to an article 100 including a substrate 110 and a coating, 200 the substrate being at least partially coated with a coating with alternating layers of a ductile nano-layer 130a, 130b and a hard layer 120, 140a adhered to each other. The coating has at least one sequence 180 of three layers: a metallic ductile nano-layer 130a located between two hard layers 120, 140a. The term "sequence" will be used throughout this text with the above meaning. The metallic ductile nano-layer is at least 70 at% of one or more metal elements. The metal elements may be Fe, Co Ni, Cu, Hf, Ag, Au, or mixtures thereof.

The alloying of a metallic nano-layer with Fe Cr, Ni, or Hf improves oxidation resistance. Alloying with Ni improves adhesive properties while alloying with Hf improves heat resistance. Alloying with Cu, Ag and Au increases ductility and wettability of the ductile layer and improves its adhesion to the hard layers.

The thickness of the ductile nano-layer may be from 5 nm to 100 nm, preferably from 10 to 50 nm. The coating has at least one sequence comprising a ductile nano-layer located between two hard layers, and may have additional sequences (shown generally as 150 in Fig. 1) created by alternating ductile nano-layers with hard layers, it being understood that adjacent sequences have a hard layer in common. The coating 200 may have between 3 and 30 such sequences, and more preferably between 5 and 20 sequences.

The term "hard layer" will be used throughout this text to include within its meaning both a single ceramic layer and a ceramic multilayer. A ceramic layer may be a nitride, oxide, boride, carbide, or combinations thereof. A ceramic multilayer is hereinafter to mean at least two ceramic layers which are consecutively deposited without a ductile nano-layer in-between.

The term "refractory metals" will be used throughout the description and claims to be the following metals: titanium, zirconium, vanadium, niobium, tantalum, chromium, molybdenum, tungsten, or mixtures thereof.

The hard layers can have any composition suitable for cutting tools and/or wear parts, such as nitrides, oxides, borides, carbides, or combinations thereof. The hard layers can be the same or different from each other with regard to structure and composition. Optionally, the hard layers may be composed of $(Me_aX_{1-a})(N_wC_xB_yO_z)$ wherein Me is one of more metals chosen from Ti, Al, Cr and Zr and wherein X is one or more elements chosen from Si, Ta, V, Y, and Nb ($0.75 < a \le 1.0$ and w+x+y+z=1). By way of example, the hard layers may be any one of (Al,Ti)N, TiN, (Al,Cr)N, CrN, ZrN, Ti(B,N), $TiB_2$, or (Zr,Al)N.

The hard layers according to the present invention may have any coating structure common in the art of coating cutting tools or wear parts. The hard layers of any sequence of the coating, may be similar or may differ from each other with regard to structure and composition. The hard layers of different sequences may differ from each other with regard to structure and composition.

The average thickness of a hard layer can be 0.05-5 μm, preferably 0.15-2 μm. The hard layers are substantially thicker than the ductile nano-layers. The thickness of the coating can be from 0.6 to 20 μm, preferably from 1 to 15 μm and most preferably from 2 to 9 μm.

The coated article may be a cutting tool or a wear part. The cutting tool may be a one-piece solid cutting tool, a cutting tool consisting of an insert holder and a cutting insert secured therein, an insert holder, or a cutting insert. The wear part may be a component used in applications where wear is a recognized problem. Wear parts may be for various wear applications such as, for example, machine parts, textile machine parts, ball bearings, roller bearings, moving parts in heat exchangers, turbo loaders, gas-turbine, exhaust valves, nozzles, manufacturing process dies for example for extrusion or wire drawing, punches, blanking tools, hot forging and pressing, molds, shear blades, plunger rods for pumps, plunger ball blanks, down hole pump check valve blanks, bushings, and other wear and impact applications.

The substrate of the article may be made of a hard metal, a cermet, high speed steel, oxide, carbide, nitride or boride ceramics, a super abrasive (PcBN or PCD), carbon steel, low alloyed steels, austenitic, ferritic or martensitic stainless steels, hot work tool steels, cold work tool steels, 51000 steels, nickel and cobalt super alloys.

The coating of the invention may optionally have at least one auxiliary layer. The auxiliary layer may be located adjacent the substrate in which case it serves as an adhesion layer 160, or the auxiliary layer may be located adjacent the outermost hard layer in which case it serves as an outermost top layer 170 of the coating 200. In some embodiments, a first auxiliary layer serves as an adhesion layer 160 between the substrate 110 and the first hard layer 120, while a second auxiliary layer serves as an outermost top layer 170 of the coating 200. The auxiliary layer comprises at least 60% elements chosen from Hf, Al, Y, Fe, Co, Ni, Cu, Si, Ag, Au, Ru, refractory metals and mixtures thereof; the thickness of the auxiliary layer is from 2 nm to 100 nm.

In one embodiment of the present invention, the ductile nano-layer is a pure metal nano-layer where the metal is chosen from Fe, Co, Ni, Cu, Hf, Ag, Au, Ru, and mixtures thereof.

In another embodiment of the present invention, the ductile nano-layer is a pure metal nano-layer where at least 0.5 at% of the metal is chosen from Fe, Co, Ni, Cu, Hf, Ag, Au and Ru, and mixtures thereof.

In an embodiment of the present invention, the ductile nano-layer is a sub-stoichiometric ceramic, a non-metal element thereof is one or more of N, O, C, or B and the metal thereof is selected from the group consisting of Fe, Co, Ni, Cu, Hf, Ag, Au, Ru, and mixtures thereof. Optionally the ductile nano-layer is a nitride. The amount of the metal element in the sub-stoichiometric ceramic is at least 70 at%, preferably 80 at%, of the sub-stoichiometric ceramic.

In another embodiment of the present invention, the ductile nano-layer is a sub-stoichiometric ceramic, the non-metal element thereof is one or more of N, O, C, or B and the metal is selected from the group consisting of Fe, Co, Ni, Cu, Hf, Ag, Au, and mixtures thereof. Optionally the ductile nano-layer is a nitride. The amount of the metal element(s) in the sub-stoichiometric ceramic is at least 70 at%, preferably 80 at%, of the sub-stoichiometric ceramic.

In other embodiments of the present invention the coating has more than one sequence of alternating hard layers and ductile nano-layers selected from one or more of the ductile nano-layers described in the previous embodiments. Optionally the coating has at least two ductile nano-layers having different compositions. For example, the coating may have ductile nano-layers of different pure metal compositions or the coating may have at least one pure metal nano-layer and at least one sub-stoichiometric nano-layer or at least two sub-stoichiometric nano-layers having different compositions.

In another embodiment of the present invention, the at least two hard layers are selected from TiAlN and AlTiN having a thickness of between 0.5 to 2 $\mu$m, and the ductile nano-layers are $Ti_xCu_y$ or $Ti_xAg_y$ (x+y=1 and x$\leq$0.9) having a thickness preferably between 20 to 50 nm.

In another embodiment of the present invention, the ductile nano-layer is an alloy consisting essentially of Cu, Ti and Al wherein Cu is at least 2 at%.

In yet another embodiment of the present invention, the ductile nano-layer is an alloy consisting essentially of Cu, Al and Cr wherein Cu is at least 2 at%.

The present invention also relates to a method of making the coated article such as the coated cutting tool or the coated wear part described in any of the above embodiments. The method comprises the steps of:

a) depositing at least one hard layer over a substrate,
b) depositing a ductile nano-layer on the at least one hard layer, and
c) depositing at least one other hard layer on the ductile nano-layer.

Steps b) and c), as described above preferably are performed between 3 and 30 times, and more preferably between 5 and 20 times, until the desired total coating thickness is achieved.

The ductile nano-layer is preferably deposited within the same coating chamber, and in same coating sequence, as the hard layers by changing the atmosphere from a reactive gas to an inert gas, e.g. He, Ar, Kr, Xe or a combination of these gases..

In other embodiments of the present invention, the coating method further comprises:

depositing a first auxiliary layer onto the substrate, prior to carrying out step b); and alternatively, or in addition depositing a second auxiliary top layer onto the outermost hard layer.

The first auxiliary layer serves as an adhesion layer between the substrate and the first hard layer. The second auxiliary layer serves as an outermost top layer of the coating. In all instances, when present, the auxiliary layer is at least 60 at% of one or more elements chosen from the group consisting of Hf, Al, Y, Fe, Co, Ni, Cu, Si, Ag, Au, Ru and refractory metals. The thickness of the auxiliary layer is from 2 nm to 100 nm.

Any PVD technique commonly used when coating cutting tools or wear parts can be used in the method of the present invention. Preferably cathodic arc evaporation or magnetron sputtering is used, although emerging technologies such as HIPIMS (high power impulse magnetron sputtering), could also be used. Even if the coating according to the present invention is referred to as a "PVD-coating" the coating can also be deposited with for example a PECVD technique (Plasma Enhanced Chemical Vapor Deposition) which will generate coatings with properties closer to those of PVD coatings than conventional CVD coatings.

**Claims**

1. An at least partially coated article comprising a substrate and a coating;
   the coating comprising alternating layers of a ductile nano-layer and a hard layer adhered to each other, there being at least one sequence of three layers comprising a ductile nano-layer located between two hard layers wherein:

   the ductile nano-layer comprises at least 70 at% metal elements and the ductile nano-layer is one of the group consisting of:

   i. a sub-stoichiometric ceramic consisting of between 70 at% and 90 at% metal elements of one or more metals selected from the group consisting of Fe, Co, Ni, Cu, Ag, Au or Hf; and up to 30 at% of a non-metal component selected from the group consisting of N, O, C, B and combinations thereof; and
   ii. $Ti_xCu_y$, $Ti_xAg_y$, $Ti_uAl_vCu_t$, and $Cr_uAl_vCu_t$; wherein x+y=1 and x$\leq$0.9 and u+v+t=1 and

$t \geq 0.02$;

the hard layer comprises one or more ceramic layers that are nitrides, oxides, borides, carbides, or combinations thereof;

the thickness of the hard layer is from 0.05 $\mu$m to 5 $\mu$m; and
the thickness of the ductile nano-layer is from 5 nm to 100 nm.

2. The coated article according to claim 1 wherein the hard layers are composed of $(Me_aX_{1-a})(N_wC_xB_yO_z)$; wherein:

Me is one or more metals chosen from the group consisting of Ti, Al, Cr and Zr;
X is one or more of elements chosen from the group consisting of Si, Ta, V, Y, and Nb; $0.75 < a \leq 1.0$; and $w+x+y+z=1$.

3. The coated article according to claim 1, wherein the coating comprises between 3 and 30 such sequences.

4. The coated article according to claim 3 comprising at least two ductile nano-layers having compositions which differ from one another.

5. The coated article according to claim 1, wherein the coating further comprises:

an auxiliary layer adjacent the substrate and serving as an adhesion layer between the substrate and a hard layer, wherein:

the auxiliary layer comprises at least 60% elements chosen from the group consisting of Hf, Al, Y, Fe, Co, Ni, Cu, Si, Ag, Au, Ru, refractory metals and mixtures thereof; and
the thickness of the auxiliary layer is from 2 nm to 100 nm.

6. The coated article according to claim 1, wherein the coating further comprises:

an auxiliary layer adjacent an outermost hard layer and serving as an outermost top layer of the coating, wherein:

the auxiliary layer comprises at least 60% elements chosen from the group consisting of Hf, Al, Y, Fe, Co, Ni, Cu, Si, Ag, Au, Ru, refractory metals and mixtures thereof; and
the thickness of the auxiliary layer is from 2 nm to 100 nm.

7. The coated article according to claim 1, wherein the coating further comprises:

a first auxiliary layer adjacent the substrate and serving as an adhesion layer between the substrate and a hard layer; and
a second auxiliary layer adjacent an outermost hard layer and serving as an outermost top layer of the coating, wherein:

the first and second auxiliary layers each comprise at least 60% elements chosen from group consisting of Hf, Al, Y, Fe, Co, Ni, Cu, Si, Ag, Au, Ru, refractory metals and mixtures thereof; and
the thickness of each auxiliary layer is from 2 nm to 100 nm.

8. The coated article according to claim 1, wherein the thickness of the coating is from 0.5 $\mu$m to 20 $\mu$m.

9. The coated article according to claim 1, wherein the article is a cutting tool or a wear part.

10. A method of making a coated article comprising a substrate and a coating, the method comprising the steps of:

a) depositing at least one hard layer over the substrate, the at least one hard layer comprising nitrides, oxides, borides, carbides, or combinations thereof;
b) depositing at least one ductile nano-layer on the at least one hard layer, the at least one ductile nano-layer comprising at least 70 at% metal elements and the nano-layer is one of the group consisting of:

i. $Ti_xCu_y$, $Ti_xAg_y$, $Ti_uAl_vCu_t$, and $Cr_uAl_vCu_t$; wherein wherein $x+y=1$ and $x \leq 0.9$ and $u+v+t=1$ and $t \geq 0.02$; and
ii. a sub-stoichiometric ceramic consisting of between 70 at% and 90 at% metal elements and up to 30 at% of a non-metal component, wherein the metal elements is at least one or more metals selected from the group consisting of Fe, Cr, Ni, Cu, Hf, Ag and Au and wherein the non-metal component selected from the group consisting of N, O, C, B and combinations thereof;

c) depositing at least one other hard layer on the ductile nano-layer, the at least one other hard layer comprising nitrides, oxides, borides, carbides, or combinations thereof; wherein:

the thickness of each of the hard layers is from 0.05 $\mu$m to 5 $\mu$m; and
the thickness of the at least one ductile nano-layer is from 5 nm to 100 nm.

11. The method according to claim 10, wherein the coating is deposited with a PVD technique.

12. The method according to claim 10, wherein the deposited, hard layers are composed of $(Me_eX_{1-a})(N_wC_xB_yO_z)$; wherein:

Me is one or more metals selected from the group consisting of Ti, Al, Cr and Zr;
X is one or more elements selected from the group consisting of Si, Ta, V, Y, and Nb;

$$0.75 < a \leq 1.0;$$

and

$$w+x+y+z=1.$$

13. The method according to claim 10, wherein steps b) and c) are alternatingly performed between 3 and 30 times.

14. The method according to claim 10, further comprising:

depositing an auxiliary layer onto the substrate, prior to carrying out step b); wherein:

the auxiliary layer comprises at least 60% elements chosen from the group consisting of Hf, Al, Y, Fe, Co, Ni, Cu, Si, Ag, Au, Ru, refractory metals and mixtures thereof; and wherein the thickness of the auxiliary layer is from 2 nm to 100 nm.

15. The method according to claim 10, further comprising:

depositing an auxiliary layer onto an outermost hard layer, whereby the auxiliary layer serves as an outermost layer of the coating, wherein:

the auxiliary layer comprises at least 60% elements chosen from the group consisting of Hf, Al, Y, Fe, Co, Ni, Cu, Si, Ag, Au, Ru, refractory metals and mixtures thereof; and wherein the thickness of the auxiliary layer is from 2 nm to 100 nm.

16. The method according to claim 10, further comprising:

depositing a first auxiliary layer onto the substrate, prior to carrying out step b); and
depositing a second auxiliary layer onto an outermost hard layer, whereby the second auxiliary layer serves as an outermost layer of the coating, wherein:

the first and second auxiliary layers each comprise at least 60% elements chosen from the group consisting of Hf, Al, Y, Fe, Co, Ni, Cu, Si, Ag, Au, Ru, refractory metals and mixtures thereof; and
the thickness of each auxiliary layer is from 2 nm to 100 nm.

17. The method according to claim 10, wherein:

steps b) and c) are alternatingly performed between 3 and 30 times in the same coating chamber using physical vapor deposition.

**Patentansprüche**

1. Mindestens teilweise beschichteter Artikel, der ein Substrat und eine Beschichtung aufweist;
wobei die Beschichtung abwechselnde Schichten einer verformbaren Nanoschicht und einer harten Schicht aufweist, die aneinander haften, wobei es mindestens eine Abfolge von drei Schichten gibt, die eine verformbare Nanoschicht aufweisen, die zwischen zwei harten Schichten angeordnet ist, wobei:

die verformbare Nanoschicht mindestens 70 at.% Metallelemente aufweist und die verformbare Nanoschicht aus einer der Gruppe besteht, die besteht aus:

i. einer unterstöchiometrischen Keramik, die aus zwischen 70 at.% und 90 at.% Metallelementen von einem oder mehreren Metallen, die aus der Gruppe ausgewählt sind, die aus Fe, Co, Ni, Cu, Ag, Au oder Hf besteht; und bis zu 30 at.% einer Nichtmetallkomponente besteht, die aus der Gruppe ausgewählt ist, die aus N, O, C, B und Kombinationen davon besteht; und
ii. $Ti_xCu_y$, $Ti_xAg_y$, $Ti_uAl_yCu_t$, und $Cr_uAl_yCu_t$; wobei x+y=1 und x≤0,9 und u+v+t=1 und t≥0,02;

die harte Schicht eine oder mehrere Keramikschichten aufweist, die Nitride, Oxide, Boride, Karbide oder Kombinationen davon aufweist;
die Dicke der harten Schicht 0,05 $\mu$m bis 5 $\mu$m beträgt; und
die Dicke der verformbaren Nanoschicht 5 nm bis 100 nm beträgt.

**2.** Beschichteter Artikel nach Anspruch 1 wobei die harten Schichten aus $(Me_aX_{1-a})(N_wC_xB_yO_x)$ zusammengesetzt sind; wobei:

Me aus einem oder mehreren Metallen besteht, die aus der Gruppe ausgewählt sind, die aus Ti, Al, Cr und Zr besteht;

X aus einem oder mehreren Elementen besteht, die aus der Gruppe ausgewählt sind, die aus Si, Ta, V, Y und Nb besteht; $0,75 < a \leq 1,0$; und $w+x+y+z=1$.

**3.** Beschichteter Artikel nach Anspruch 1, wobei die Beschichtung zwischen 3 und 30 solche Abfolgen aufweist.

**4.** Beschichteter Artikel nach Anspruch 3, der mindestens zwei verformbare Nanoschichten aufweist, die Zusammensetzungen aufweisen, die sich voneinander unterscheiden.

**5.** Beschichteter Artikel nach Anspruch 1, wobei die Beschichtung ferner aufweist:

eine an das Substrat angrenzende Hilfsschicht, die als eine Adhäsionsschicht zwischen dem Substrat und einer harten Schicht dient, wobei:

die Hilfsschicht mindestens 60% Elemente aufweist, die aus der Gruppe ausgewählt sind, die aus Hf, Al, Y, Fe, Co, Ni, Cu, Si, Ag, Au, Ru, hochschmelzenden Metallen und Mischungen davon besteht; und die Dicke der Hilfsschicht 2 nm bis 100 nm beträgt.

**6.** Beschichteter Artikel nach Anspruch 1, wobei die Beschichtung ferner aufweist:

eine an eine äußerste harte Schicht angrenzende Hilfsschicht, die als äußerste obere Schicht der Beschichtung dient, wobei:

die Hilfsschicht mindestens 60% Elemente aufweist, die aus der Gruppe ausgewählt sind, die aus Hf, Al, Y, Fe, Co, Ni, Cu, Si, Ag, Au, Ru, hochschmelzenden Metallen und Mischungen davon besteht; und die Dicke der Hilfsschicht 2 nm bis 100 nm beträgt.

**7.** Beschichteter Artikel nach Anspruch 1, wobei die Beschichtung ferner aufweist:

eine erste an das Substrat angrenzende Hilfsschicht, die als eine Adhäsionsschicht zwischen dem Substrat und einer harten Schicht dient; und

eine zweite an eine äußerste harte Schicht angrenzende Hilfsschicht, die als eine äußerste obere Schicht der Beschichtung dient, wobei:

die erste und zweite Hilfsschicht jeweils mindestens 60% Elemente aufweisen, die aus der Gruppe ausgewählt sind, die aus Hf, Al, Y, Fe, Co, Ni, Cu, Si, Ag, Au, Ru, hochschmelzenden Metallen und Mischungen davon besteht; und die Dicke jeder Hilfsschicht 2 nm bis 100 nm beträgt.

**8.** Beschichteter Artikel nach Anspruch 1, wobei die Dicke der Beschichtung von 0,5 $\mu$m bis 20 $\mu$m beträgt.

**9.** Beschichteter Artikel nach Anspruch 1, wobei der Artikel ein Schneidwerkzeug oder ein Verschleißteil ist.

**10.** Verfahren zum Herstellen eines beschichteten Artikels, der ein Substrat und eine Beschichtung aufweist, wobei das Verfahren die Schritte aufweist:

a) Abscheiden mindestens einer harten Schicht über dem Substrat, wobei die mindestens eine harte Schicht Nitride, Oxide, Boride, Karbide, oder Kombinationen davon aufweist;

b) Abscheiden mindestens einer verformbaren Nanoschicht auf der mindestens einen harten Schicht, wobei die mindestens eine verformbare Nanoschicht mindestens 70 at.% Metallelemente aufweist und die Nanoschicht aus einer der Gruppe besteht, die besteht aus:

i. $Ti_xCu_y$, $Ti_xAg_y$, $Ti_uAl_vCu_t$, und $Cr_uAl_vCu_t$; wobei $x+y=1$ und $x \leq 0,9$ und $u+v+t=1$ und $t \geq 0,02$; und

ii. einer unterstöchiometrischen Keramik, die aus zwischen 70 at.% und 90 at.% Metallelementen und bis zu 30 at.% einer Nichtmetallkomponente besteht, wobei die Metallelemente aus mindestens einem oder mehreren Metallen bestehen, die aus der Gruppe ausgewählt sind, die aus Fe, Cr, Ni, Cu, Hf, Ag und Au besteht, und wobei die Nichtmetallkomponente aus der Gruppe ausgewählt ist, die aus N, O, C, B und Kombinationen davon besteht;

c) Abscheiden mindestens einer anderen harten Schicht auf die verformbare Nanoschicht, wobei die mindestens eine andere harte Schicht Nitride, Oxide, Boride, Karbide oder Kombinationen davon aufweist; wobei:

die Dicke jeder der harten Schichten 0,05 $\mu$m bis 5 $\mu$m beträgt; und

die Dicke der mindestens einen verformbaren Nanoschicht 5 nm bis 100 nm beträgt.

11. Verfahren nach Anspruch 10, wobei die Beschichtung mit einer PVD-Technik abgeschieden wird.

12. Verfahren nach Anspruch 10, wobei die abgeschiedenen, harten Schichten aus $(Me_aX_{1-a})(N_wC_xB_yO_z)$ zusammengesetzt sind; wobei:

Me aus einem oder mehreren Metallen besteht, die aus der Gruppe ausgewählt sind, die aus Ti, Al, Cr und Zr besteht;
X aus einem oder mehreren Elementen besteht, die aus der Gruppe ausgewählt sind, die aus Si, Ta, V, Y und Nb besteht;

$$0,75 < a \leq 1,0;$$

und

$$w+x+y+z=1.$$

13. Verfahren nach Anspruch 10, wobei die Schritte b) und c) abwechselnd zwischen 3 und 30 Mal ausgeführt werden.

14. Verfahren nach Anspruch 10, das ferner aufweist:

Abscheiden einer Hilfsschicht auf dem Substrat, vor dem Ausführen des Schritts b); wobei:

die Hilfsschicht mindestens 60% Elemente aufweist, die aus der Gruppe ausgewählt sind, die aus Hf, Al, Y, Fe, Co, Ni, Cu, Si, Ag, Au, Ru, hochschmelzenden Metallen und Mischungen davon besteht; und wobei die Dicke der Hilfsschicht 2 nm bis 100 nm beträgt.

15. Verfahren nach Anspruch 10, das ferner aufweist:

Abscheiden einer Hilfsschicht auf eine äußerste harte Schicht, wodurch die Hilfsschicht als eine äußerste Schicht der Beschichtung dient, wobei:

die Hilfsschicht mindestens 60% Elemente aufweist, die aus der Gruppe ausgewählt sind, die aus Hf, Al, Y, Fe, Co, Ni, Cu, Si, Ag, Au, Ru, hochschmelzenden Metallen und Mischungen davon besteht; und wobei die Dicke der Hilfsschicht 2 nm bis 100 nm beträgt.

16. Verfahren nach Anspruch 10, das ferner aufweist:

Abscheiden einer ersten Hilfsschicht auf dem Substrat, vor dem Ausführen des Schritts b); und Abscheiden einer zweiten Hilfsschicht auf eine äußerste harte Schicht, wodurch die zweite Hilfsschicht als eine äußerste Schicht der Beschichtung dient, wobei:

die erste und zweite Hilfsschicht jeweils mindestens 60% Elemente aufweisen, die aus der Gruppe ausgewählt sind, die aus Hf, Al, Y, Fe, Co, Ni, Cu, Si, Ag, Au, Ru, hochschmelzenden Metallen und Mischungen davon besteht; und die Dicke jeder Hilfsschicht 2 nm bis 100 nm beträgt.

17. Verfahren nach Anspruch 10, wobei:

die Schritte b) und c) abwechselnd zwischen 3 und 30 Mal in derselben Beschichtungskammer mittels physikalischer Dampfabscheidung ausgeführt werden.

**Revendications**

1. Article au moins partiellement revêtu, comportant un substrat et un revêtement ;
le revêtement comprenant des couches alternant d'une nanocouche ductile et d'une couche dure adhérant l'une à l'autre, au moins une séquence de trois couches comprenant une nanocouche ductile étant intercalée entre deux couches dures, où :

la nanocouche ductile contient au moins 70 % at d'éléments métalliques et la nanocouche ductile est un élément du groupe composé de :

i. une céramique sub-stoechiométrique comprenant entre 70 % at et 90 % at d'éléments métalliques d'un ou de plusieurs métaux sélectionnés dans le groupe composé de Fe, Co, Ni, Cu, Ag, Au ou Hf ; et jusqu'à 30 % at d'un composant non métallique sélectionné dans le groupe composé de N, O, C, B et de combinaisons de ceux-ci ; et
ii. $Ti_xCu_y$, $Ti_xAg_y$, $Ti_uAl_vCu_t$ et $Cr_uAl_vCu_t$ ; où x+y=1, x≤0,9, u+v+t=1 et t≥0,02 ;

la couche dure contient une ou plusieurs couches céramiques qui sont des nitrures, oxydes, borures, carbures ou des combinaisons de ceux-ci ;
l'épaisseur de la couche dure est comprise entre 0,05 $\mu$m et 5 $\mu$m ; et
l'épaisseur de la nanocouche ductile est comprise entre 5 nm et 100 nm.

**2.** Article revêtu selon la revendication 1, où les couches dures sont en $(Me_aX_{1-a})(N_wC_xB_yO_z)$ ; où :

Me est un ou plusieurs métaux sélectionnés dans le groupe composé de Ti, Al, Cr et Zr ; X est un ou plusieurs éléments sélectionnés dans le groupe composé de Si, Ta, V, Y et Nb ; $0,75 < a \leq 1,0$ ; et $w+x+y+z=1$.

**3.** Article revêtu selon la revendication 1, où le revêtement contient entre 3 et 30 séquences de ce type.

**4.** Article revêtu selon la revendication 3, comprenant au moins deux nanocouche ductiles avec des compositions différentes.

**5.** Article revêtu selon la revendication 1, où le revêtement comprend en outre :

une couche auxiliaire adjacente au substrat et servant de couche d'adhésion entre le substrat et une couche dure, où :

la couche auxiliaire contient au moins 60 % d'éléments sélectionnés dans le groupe composé de Hf, Al, Y, Fe, Co, Ni, Cu, Si, Ag, Au, Ru, de métaux réfractaires et de mélanges de ceux-ci ; et où l'épaisseur de la couche auxiliaire est comprise entre 2 nm et 100 nm.

**6.** Article revêtu selon la revendication 1, où le revêtement comprend en outre :

une couche auxiliaire adjacente à une couche dure ultrapériphérique et servant de couche supérieure ultrapériphérique du revêtement, où :

la couche auxiliaire contient au moins 60 % d'éléments sélectionnés dans le groupe composé de Hf, Al, Y, Fe, Co, Ni, Cu, Si, Ag, Au, Ru, de métaux réfractaires et de mélanges de ceux-ci ; et où l'épaisseur de la couche auxiliaire est comprise entre 2 nm et 100 nm.

**7.** Article revêtu selon la revendication 1, où le revêtement comprend en outre :

une première couche auxiliaire adjacente au substrat et servant de couche d'adhésion entre le substrat et une couche dure ; et une deuxième couche auxiliaire adjacente à une couche dure ultrapériphérique et servant de couche supérieure ultrapériphérique du revêtement, où :

la première et la deuxième couche auxiliaires comprennent chacune au moins 60 % d'éléments sélectionnés dans le groupe composé de Hf, Al, Y, Fe, Co, Ni, Cu, Si, Ag, Au, Ru, de métaux réfractaires et de mélanges de ceux-ci ; et où l'épaisseur de chaque couche auxiliaire est comprise entre 2 nm et 100 nm.

**8.** Article revêtu selon la revendication 1, où l'épaisseur du revêtement est comprise entre 0,5 $\mu$m et 20 $\mu$m.

**9.** Article revêtu selon la revendication 1, où l'article est un outil de coupe ou une pièce d'usure.

**10.** Procédé de fabrication d'un article revêtu comprenant un substrat et un revêtement, ledit procédé comprenant les étapes de :

a) dépôt d'au moins une couche dure sur le substrat, la ou les couches dures comprenant des nitrures, oxydes, borures, carbures ou des combinaisons de ceux-ci ; b) dépôt d'au moins une nanocouche ductile sur la ou les couches dures, la ou les nanocouches ductiles comprenant au moins 70 % at d'éléments métalliques et la nanocouche étant un élément du groupe composé de :

i. $Ti_xCu_y$, $Ti_xAg_y$, $Ti_uAl_vCu_t$ et $Cr_uAl_vCu_t$ ; où $x+y=1$, $x \leq 0,9$, $u+v+t=1$ et $t \geq 0,02$ ; et ii. une céramique sub-stoechiométrique composée de 70 % at à 90 % at d'éléments métalliques, et de jusqu'à 30 % at d'un composant non métallique, où les éléments métalliques sont au moins un ou plusieurs métaux sélectionnés dans le groupe composé de Fe, Cr, Ni, Cu, Hf, Ag et Au, et où le composant non métallique est sélectionné dans le groupe composé de N, O, C, B et de combinaisons de ceux-ci ;

c) dépôt d'au moins une autre couche dure sur la nanocouche ductile, l'autre ou les autres couches dures comprenant des nitrures, oxydes, borures, carbures ou des combinaisons de ceux-ci ; où :

l'épaisseur de chacune des couches dures est comprise entre 0,05 $\mu$m et 5 $\mu$m ; et l'épaisseur de la ou des nanocouches ductiles est comprise entre 5 nm et 100 nm.

**11.** Procédé selon la revendication 10, où le revêtement est déposé au moyen d'un procédé de dépôt physique en phase vapeur.

**12.** Procédé selon la revendication 10, où les couches dures déposées sont composées de $(Me_aX_{1-a})(N_wC_xB_yO_z)$ ; où :

Me est un métal ou plusieurs métaux sélectionnés dans le groupe composé de Ti, Al, Cr et Zr ; X est un ou plusieurs éléments sélectionnés dans le groupe composé de Si, Ta, V, Y, et Nb;

$$0,75 < a \leq 1,0 \ ;$$

et

$$w+x+y+z=1.$$

13. Procédé selon la revendication 10, où les étapes b) et c) sont exécutées en alternance entre 3 et 30 fois.

14. Procédé selon la revendication 10, comprenant en outre :

le dépôt d'une couche auxiliaire sur le substrat préalablement à l'exécution de l'étape b); où :

la couche auxiliaire contient au moins 60 % d'éléments sélectionnés dans le groupe composé de Hf, Al, Y, Fe, Co, Ni, Cu, Si, Ag, Au, Ru, de métaux réfractaires et de mélanges de ceux-ci ; et où l'épaisseur de la couche auxiliaire est comprise entre 2 nm et 100 nm.

15. Procédé selon la revendication 10, comprenant en outre :

le dépôt d'une couche auxiliaire sur une couche dure ultrapériphérique, la couche auxiliaire servant de couche ultrapériphérique du revêtement, où :

la couche auxiliaire contient au moins 60 % d'éléments sélectionnés dans le groupe composé de Hf, Al, Y, Fe, Co, Ni, Cu, Si, Ag, Au, Ru, de métaux réfractaires et de mélanges de ceux-ci ; et où l'épaisseur de la couche auxiliaire est comprise entre 2 nm et 100 nm.

16. Procédé selon la revendication 10, comprenant en outre :

le dépôt d'une première couche auxiliaire sur le substrat, préalablement à l'exécution de l'étape b) ; et

le dépôt d'une deuxième couche auxiliaire sur une couche dure ultrapériphérique, la deuxième couche auxiliaire servant de couche ultrapériphérique du revêtement, où :

la première et la deuxième couche auxiliaires comprennent chacune au moins 60 % d'éléments sélectionnés dans le groupe composé de Hf, Al, Y, Fe, Co, Ni, Cu, Si, Ag, Au, Ru, de métaux réfractaires et de mélanges de ceux-ci ; et où l'épaisseur de chaque couche auxiliaire est comprise entre 2 nm et 100 nm.

17. Procédé selon la revendication 10, où :

les étapes b) et c) sont exécutées en alternance entre 3 et 30 fois dans la même chambre de revêtement par dépôt physique en phase vapeur.

<u>100</u>

**Fig. 1**

**EP 2 507 409 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2072637 A2